# EUROPÄISCHE PATENTANMELDUNG

(11) **EP 1 679 802 A1**
(43) Veröffentlichungstag der Anmeldung: **12.07.2006**
(21) Anmeldenummer: 05000254.2
(22) Anmeldetag: 07.01.2005
(51) Int. Cl.: H04B 1/04

(54) **Verfahren und Schaltung zum Erzeugen und Detektieren eines Sendesignals**

(71) Anmelder: Success Chip Ltd., c/o Offshore Incorporations Ltd., P.O. Box 957, Offshore Incorporations Center, Tortola (VG)
(72) Erfinder: Hamm, Dirk, 47877 Willich (DE); Lenkeit, Marc, 47877 Willich (DE)
(74) Vertreter: Englaender, Klaus

(57) **Zusammenfassung**

Die Erfindung betrifft ein Verfahren zum Erzeugen und Detektieren eines Sendesignals für frequenzmodulierende (FM-) Audio-Übertragungssysteme, insbesondere für Audio-Funkübertragungssysteme, das neben einer Audioinformation umfassenden ersten Signalkomponente (Nutzsignal) eine zweite Signalkomponente (Zusatzsignal) umfasst, die Status- und/oder Steuerinformation beinhaltet. Erfindungsgemäß ist vorgesehen, dass die zweite Signalkomponente nach FM-Demodulation Hauptspektralkomponenten unterhalb des Audioinformations-Nutzspektrums im Basisband aufweist.

## Beschreibung

Die Erfindung betrifft ein Verfahren und eine Schaltung zum Erzeugen und Detektieren eines Sendesignals für frequenzmodulierende (FM-) Audio-Übertragungssysteme, insbesondere für Audio-Funkübertragungssysteme, das neben einer Audioinformation umfassenden ersten Signalkomponente (Nutzsignal) eine zweite Signalkomponente (Zusatzsignal) umfasst, die Status- und/oder Steuerinformation beinhaltet.

Eine Vielzahl unterschiedlicher Konzepte für Sende- und Empfangseinrichtungen sind bekannt, die zusätzliche Information, wie etwa Steuer- und Zustandsinformation im Sendesignal übertragen und detektieren. Zu nennen sind hier beispielsweise das "Tone-Squelch-" und das "Pilot-Tone-" Verfahren. Diese Verfahren benötigen zumindest einen speziellen Oszillator, der eine oder mehrere Steuersignale (z.B. Sinusfrequenzen) erzeugt, welche dem Audiosignal vor einer Modulationsstufe oder dem FM-Signal nach einer Modulationsstufe überlagert werden. Diese zusätzlichen Signale (Töne) liegen vor der FM-Modulation bzw. nach der FM-Demodulation üblicherweise innerhalb (z.B. 67 Hz bis 250 Hz) oder oberhalb (typischerweise 18 kHz - 25 kHz) des im Basisband-Spektrum liegenden Audiobereichs und müssen vom Empfänger zur Detektion selektiert werden. Die detektierten Signale steuern beispielsweise das Stummschalten eines Empfängers, falls das Signal nicht erkannt wird, oder das Einschalten eines Stereo-Decoders bei Signalerkennung.

Die vorstehend zum Stand der Technik genannten Verfahren sind mit einer Reihe von Nachteilen behaftet:
- Liegen die Steuersignale innerhalb des Basisband-Nutzspektrums, können im Bereich dieser Frequenzen keine Nutzsignale übertagen werde, wodurch das Nutzspektrum verfälscht bzw. beschnitten wird.
- Falls oberhalb des Basisband-Nutzspektrums liegende Steuersignale dem Audiosignal vor der Modulation zugeführt, d.h. sie frequenzmoduliert werden, ergibt sich ein erhöhter Bandbreitenbedarf für den Übertragungskanal, um gleichzeitig das Audiosignal in unverminderter Qualität übertragen und das Steuersignal eindeutig erkennen zu können. Bei gegebener Übertragungskanalbandbreite erfordert dies eine Verringerung des Modulationsindexes, was mit einer Beeinträchtigung des erreichbaren Signal-Rauschabstands einher geht.
- Bei Verwendung einzelner Pilot-Töne die nach der Modulationsstufe in das FM-Spektrum verschachtelt oder über einen gesonderten Frequenzbereich übertragen werden, wird zusätzliche Sendeleistung, und je nach Ausführung zusätzliche Bandbreite benötigt. Zusätzliche Sendeleistung führt zu einer Erhöhung des Stromverbrauchs des Senders und bei Batterie- oder Akkumulator-betriebenen Geräten zu einer Verkürzung der maximal verfügbaren Betriebszeit.

Es besteht deshalb ein Bedarf an einem Verfahren und einer Schaltung zur Erzeugung eines Sendesignals, das neben dem Audio-Nutzsignal ein zusätzliches Signal mit Status- und/oder Steuerinformation umfasst und nicht mit den vorstehend genannten Nachteilen behaftet ist.

Eine Aufgabe der Erfindung besteht darin, ein Verfahren und eine Schaltung der eingangsgenannten Art zu schaffen, die eine gleichzeitige Übertragung von Nutz- und Zusatzsignal ohne Beeinträchtigung des Nutzsignals gewährleistet.

Eine weitere Aufgabe der Erfindung besteht darin, ein Verfahren und eine Schaltung der eingangsgenannten Art zu schaffen, die nach einer Demodulation des Sendesignals eine zuverlässige Unterdrückung des Zusatzsignals gewährleisten.

Eine weitere Aufgabe der Erfindung besteht darin, ein Verfahren und eine Schaltung der eingangsgenannten Art zu schaffen, die keine nennenswerte Vergrößerung der Bandbreite des Sendesignals erfordern.

Noch eine weitere Aufgabe der Erfindung besteht darin, ein Verfahren und eine Schaltung der eingangsgenannten Art zu schaffen, die auch im Batterie- oder Akkumulatorbetrieb lange Betriebszeiten gewährleisten.

Schließlich besteht eine Aufgabe der Erfindung darin, ein Verfahren und eine Schaltung der eingangsgenannten Art zu schaffen, die bei geringem Bauteileaufwand realisierbar sind.

Gelöst wird diese Aufgabe hinsichtlich des Verfahrens durch die Merkmale des Anspruchs 1 und hinsichtlich der Schaltung durch die Merkmale des Anspruchs 7. Vorteilhafte Weiterbildungen der Erfindung sind in den Unteransprüchen angegeben.

Um die Forderung nach zeitgleicher, hochqualitativer Audio-Übertragung ohne Beschneidung oder Verfälschung des Audio-Spektrums im Frequenzbereich 20 Hz - 20 kHz zu erfüllen, wird erfindungsgemäß eine Modulationsfrequenz erzeugt, die unterhalb des Audio-Nutzspektrums liegt, bevorzugt unterhalb von 20 Hertz und besonders bevorzugt im Bereich von 5 Hertz liegt.

Der Empfang und die FM-Demodulation des erfindungsgemäß erzeugten Sendesignals mit Nutz- und Zusatzsignalanteil unterscheiden sich nicht wesentlich von üblichen Sender-/Empfängerkonzepten für reine Audiosignal-Übertragung. Die für die Signale im Basisband vorgesehenen Koppelkondensatoren müssen lediglich so ausgelegt werden, dass die Signalkomponente mit der niedrigsten Frequenz - die des zu detektierenden Zusatzsignals - ausreichende Amplitude aufweist. Nach der FM-Demodulation und ausreichender Signalverstärkung werden erfindungsgemäß das Audio-Nutzsignal und das Steuer- und/oder Statusinformation enthaltende Zusatzsignal durch Frequenzfilterung voneinander getrennt.

Während das Audio-Nutzsignal empfängerseitig in üblicher Weise weiter verarbeitet werden kann, ist es für eine sichere Erkennung von Vorteil, das Zusatzsignal z.B. für Steuerungszwecke und/oder Statusanzeigen geeignet aufzubereiten. Hierbei ist insbesondere zu beachten, dass Störungen im Übertragungskanal oder kurzfristige Instabilitäten des Sendermodulators zum unbeabsichtigten Empfang sehr niederfrequenter Spektralanteile führen können. Diese niederfrequenten Spektralanteile können auch im Filterdurchlassbereich des Steuerkanals liegen und somit eine zuverlässige Erkennung erschweren. Da davon ausgegangen werden kann, dass diese Störungen nur kurzfristig auftreten, wird die Detektionssicherheit erfindungsgemäß durch eine längere Signalbeobachtungszeit verbessert.

In einer vorteilhaften Ausführungsform der erfindungsgemäßen senderseitigen Schaltung werden die Teiler- bzw. Zählerregister eines die Sendefrequenz bestimmenden programmierbaren Phasenregelkreises (PLL) von einem Mikrocontroller periodisch derart umprogrammiert, dass der unmodulierte Träger periodisch von seiner Grundfrequenz ausgelenkt wird. Diese Auslenkung kann symmetrisch, z.B. mit der Schaltfolge: [fo, (fo + df), fo, (fo - df)] bzw. [fo, (fo + df), (fo - df), (fo + df), (fo - df), ..., fo]), oder unsymmetrisch, z.B. mit der Schaltfolge: [fo, (fo + df)] bzw. [fo, (fo - df)]) statt finden (hierbei gilt: fo = Trägermittenfrequenz des unmodulierten Sendesignals, df= feste Frequenzdifferenz. Bei unsymmetrischer Aussteuerung und der daraus verbundenen Trägermittenfrequenzverschiebung ist auf die Einhaltung der geforderten Frequenztoleranz zu achten).

Den minimalen Frequenzhub bestimmt das einstellbare Frequenzraster des PLL - Synthesizers. Der maximale Frequenzhub wird in erster Linie durch die Teileränderung im PLL-Synthesizer festgelegt.

Das PLL - Schleifenfilter und die Einstellung der PLL-Synthesizer-Ladungspumpe (Charge Pump) zur Ansteuerung des spannungsgesteuerten Oszillators (VCO) beeinflussen hierbei das Einschwingverhalten des PLL-Systems, das seinerseits direkten Einfluss auf den im VCO erzeugten Frequenzhub hat.

Das Schleifenfilter und die Einstellung der Ladungspumpe müssen dahin optimiert werden dass
- kein Überschwingen der VCO - Frequenz beim periodischen Ändern der Teiler- bzw. Zählerregister hervorgerufen wird, und
- Oberwellen (Harmonische des Grundfrequenz) im VCO - Steuersignal unterdrückt werden.

Das erzeugte und vom PLL-Synthesizer über die Abstimmspannung modulierte VCO-Signal hat dann erfindungsgemäß die charakteristischen Merkmale eines modulierten FM-Signals am VCO Ausgang.

Zusammengefasst zeichnet sich die Erfindung in Bezug auf den Stand der Technik durch folgende Vorteile aus:
- Das Zusatzsignal kann zeitgleich mit einer hochqualitativen Übertragung des Audio-Nutzsignals gesendet werden, ohne das Audio-Spektrum im typischen Frequenzbereich von 20 Hz bis 20 kHz zu beschneiden oder zu verfälschen. (Nutzsignalintegrität).
- Das Steuersignal kann im Empfänger nach der Demodulation elektrisch so unterdrückt werden, dass es vom Benutzer über einen Schallwandler nicht wahrnehmbar ist. Dies gilt unabhängig davon, ob gleichzeitig ein Audio-Nutzsignal übertragen wird oder nicht (Steuersignalunterdrückung / Nutzsignalintegrität).
- Die Bandbreite des Sendesignals muss für das Zusatzsignal nicht signifikant vergrößert werden. Hierdurch bleibt außerdem der Signal-Rauschabstand des demodulierten Audio-Nutzsignals näherungsweise unbeeinflusst (benötigte Bandbreite / SNR). Typischweise ergibt sich ein zusätzlicher Bandbreitenbedarf von 2 kHz, der im Verhältnis zu den üblichen 200-kHz-Kanalbandbreiten als geringfügig einzuschätzen ist (s. Figurenbeschreibung).
- Der Energieverbrauch des Senders ist unabhängig von der Aussendung des Zusatzsignals, was der maximalen Betriebszeit bei Batterie- oder Akkumulator-betriebenen Geräten zu gute kommt (max. Betriebszeit).
- Für die Erzeugung und Detektion des Zusatzsignals sind keine zusätzlichen Oszillatoren erforderlich, was dem Bauteile- und Energiebedarf zu gute kommt (Bauteilkosten / max. Betriebszeit).

Die Erfindung wird nachfolgend anhand der Zeichnung beispielhaft näher erläutert; in dieser zeigen:
- Fig.1: ein Blockschaltbild einer Ausführungsform des Signalerzeugungsteils der erfindungsgemäßen (senderseitigen) Schaltung (moduliertes Nutz- und Zusatzsignal),
- Fig.2: ein Blockschaltbild einer Ausführungsform des Signalauftrennungsteils der erfindungsgemäßen (empfängerseitigen) Schaltung,
- Fig.3: ein Spektrum eines von einem Sender übertragenen, erfindungsgemäß erzeugten Sendesignals bei 1 kHz Signalhub (Umschaltung im 1-kHz-Raster),
- Fig. 4: ein Basisband-Spektrum des von einem Empfänger empfangenen FM-demodulierten Sendesignals von Fig. 3 bei 1 kHz Signalhub (Umschaltung im 1-kHz-Raster) (d.h., des Empfangssignals),
- Fig. 5: ein Spektrum eines von einem Sender übertragenen, erfindungsgemäß erzeugten Sendesignals bei gleichzeitiger Modulation durch Audio- und Zusatzsignal,
- Fig. 6: ein Basisband-Spektrum des von einem Empfänger empfangenen FM-demodulierten kombinierten Sendesignals von Fig. 5 (d.h., des Empfangssignals),
- Fig. 7: ein Spektrum eines von einem Sender übertragenen Sendesignals bei Modulation durch ein Audiosignal, und
- Fig. 8: ein Basisband-Spektrum des von einem Empfänger empfangenen FM-demodulierten Sendesignals von Fig. 7(d.h., des Empfangssignals).

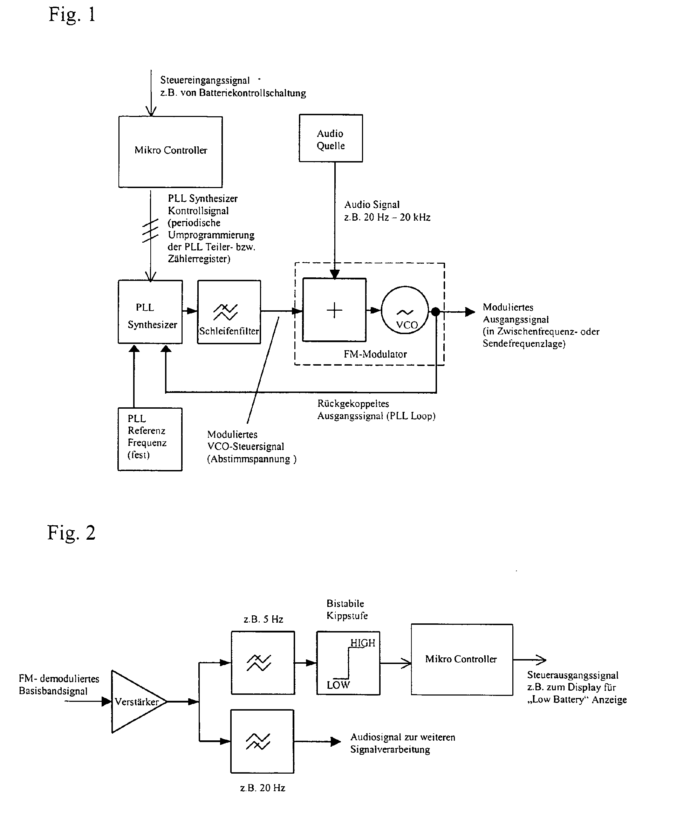

In Fig. 1 ist in Gestalt eines Blockschaltbildes eine Ausführungsform des senderseitigen Schaltungsteils der erfindungsgemäßen Schaltung zum Erzeugen eines Sendesignals für frequenzmodulierende (FM-) Audio-Übertragungssysteme, insbesondere für Audio-Funkübertragungssysteme gezeigt, das neben einer Audioinformation umfassenden ersten Signalkomponente (Nutzsignal) eine zweite Signalkomponente (Zusatzsignal) umfasst, die Status- und/oder Steuerinformation beinhaltet. In Fig. 2 ist ebenfalls in Gestalt eines Blockschaltbilds eine Ausführungsform des empfängerseitigen Schaltungsteils der erfindungsgemäßen Schaltung zum Detektieren des im senderseitgen Schaltungsteil von Fig. 1 erzeugten Sendesignals gezeigt.

In dem Schaltungsteil von Fig. 1 werden die Teiler- bzw. Zählerregister eines Sendefrequenz - bestimmenden programmierbaren Phasenregelkreises (PLL) von einem Mikrocontroller periodisch derart umprogrammiert, sodass der unmodulierte Träger periodisch von seiner Grundfrequenz ausgelenkt wird.

Diese Auslenkung kann symmetrisch (z.B. Schaltfolge: [fo, (fo + df), fo, (fo - df)] bzw. [fo, (fo + df), (fo - df), (fo + df), (fo - df), ..., fo]) oder unsymmetrisch (z.B. Schaltfolge: [fo, (fo + df)] bzw. [fo, (fo - df)]) erfolgen (hierbei gilt: fo = Trägermittenfrequenz des unmodulierten Sendesignals, df = feste Frequenzdifferenz. Bei unsymmetrischer Aussteuerung und der daraus verbundenen Trägermittenfrequenzverschiebung ist auf die Einhaltung der geforderten Frequenztoleranz zu achten).

Den minimalen Frequenzhub bestimmt das einstellbare Frequenzraster des PLL - Synthesizers. Der maximale Frequenzhub wird in erster Linie durch die Teileränderung im PLL - Synthesizer festgelegt.

Das PLL - Schleifenfilter und die Einstellung der PLL - Synthesizer Ladungspumpe (Charge Pump) zur Ansteuerung des spannungsgesteuerten Oszillators (VCO) beeinflussen hierbei das Einschwingverhalten des PLL - Systems welches seinerseits direkten Einfluss auf den im VCO erzeugten Frequenzhub aufweist.

Das Schleifenfilter und die Einstellung der Ladungspumpe müssen dahin optimiert werden das möglichst:
- kein Überschwingen der VCO - Frequenz beim periodischen Ändern der Teiler- bzw. Zählerregister hervorgerufen wird und
- Oberwellen (Harmonische des Grundfrequenz) im VCO - Steuersignal unterdrückt werden.

Das erzeugte und vom PLL - Synthesizer über die Abstimmspannung modulierte VCO - Signal hat dann erfindungsgemäß die charakteristischen Merkmale eines modulierten FM - Signals am VCO-Ausgang.

Um eine zeitgleiche, hochqualitative Audio-Nutzsignalübertragung ohen Beschneidung oder Verfälschung des Audiosignal-Spektrums im Nutzfrequenzbereich von 20 Hz bis 20 kHz zu gewährleisten, wird erfindungsgemäß eine VCO-Modulationsfrequnez erzeugt, die unterhalb des Audio-Nutzfrequenzbereichs liegt. Im Ausführungsbeispiels von Fig. 1 liegt die Modulationsfrequenz beispielsweise bei 5 Hz.

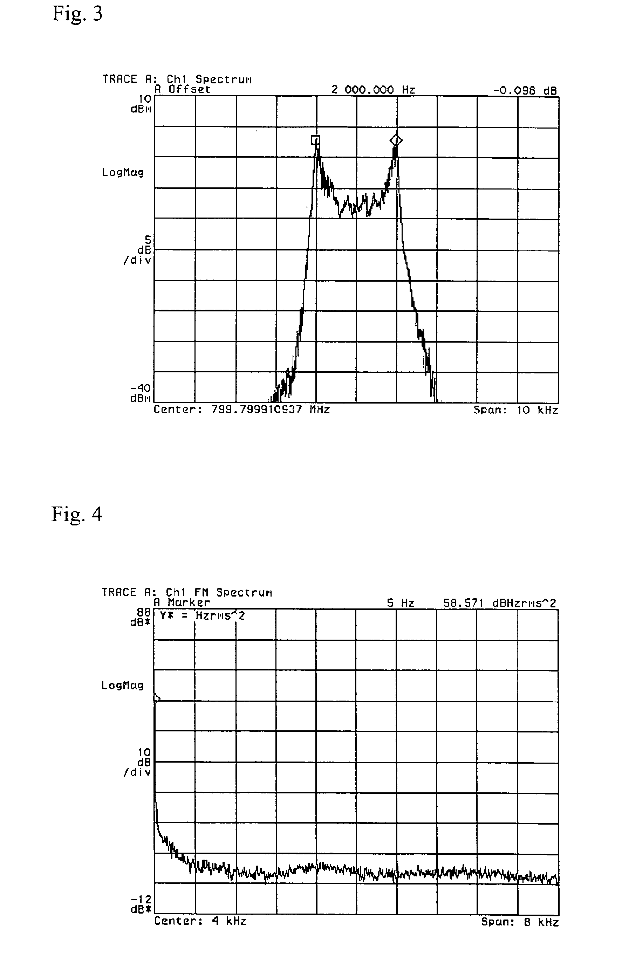

Fig. 3 und 4 zeigen die Spektren von Sendesignal (Fig. 3) und FM-demoduliertem, vom Empfänger empfangenen Sendesignal (Empfangssignal) (Fig. 4) bei einem senderseitigen Frequenzraster von 1 kHz und einer periodischen Teiler- bzw. Zählerregisteränderung des PLL-Synthesizers in der Schaltfolge [+1, -1, -1, +1] mit 50 ms Schaltabstand (Schleifenfilter und Ladungspumpenstrom optimiert). Das beschriebene Sendesignal weist ein typisches FM - Spektrum mit einem Frequenzhub von 1 kHz auf.

Das demodulierte Empfangssignal zeigt nur eine nennenswerte Spektrallinie bei 5 Hz. Das übrige Spektrum enthält praktisch keine zusätzlichen Spektralkomponenten. Bildet der spannungsgesteuerte Oszillator (VCO) einen Teil eines Audio FM-Modulators indem beispielsweise das eingespeiste Audio Signal die VCO-Frequenz mit einer Varaktordiode im Oszillator-Resonanzkreis verstimmt, so überlagern sich beide Trägerfrequenz bestimmenden Signale im Oszillator-Resonanzkreis zum kombinierten FM Sendesignal.

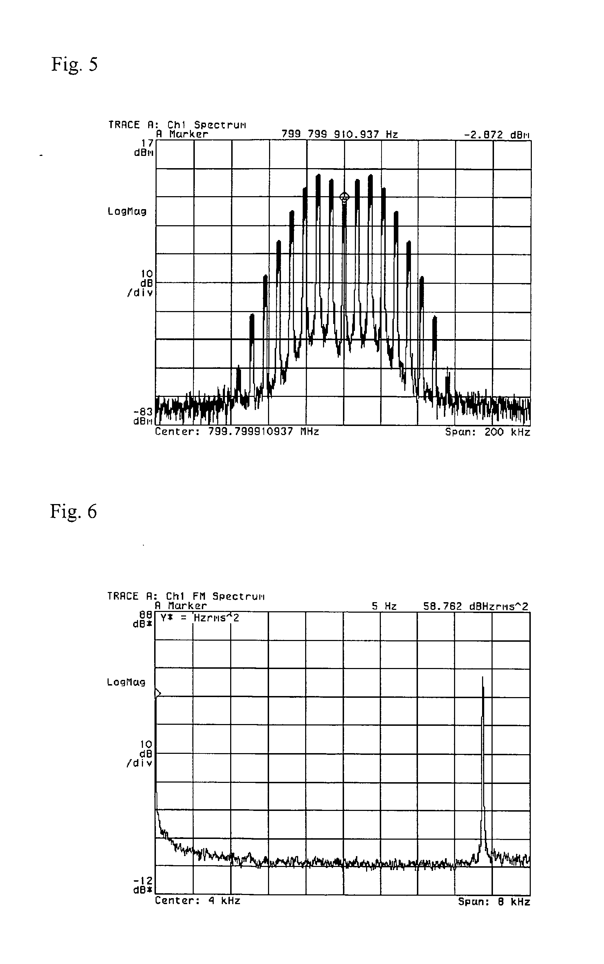

Fig. 5 und 6 zeigen die Spektren des vorstehend erläuterten Sendesignals (Fig. 5) und des FM-demodulierten Empfangssignals (Fig. 6) bei einem senderseitigen Frequenzraster von 1 kHz, einer periodischen Teiler- bzw. Zählerregisteränderung des PLL - Synthesizers in der Schaltfolge [+1, -1, -1, +1] mit 50 ms Schaltabstand und zusätzlicher Audio-Modulation (7 kHz Sinus).

Fig. 6 zeigt das FM-demodulierte Empfangssignal im Basisband-Spektrum. Das 5 Hz Signal welches durch die Umschaltung der Teiler- bzw. Zählerregister im PLL - Synthesizer erzeugt wurde sowie das 7 kHz Audio-Signal sind eindeutig erkennbar. Das übrige Spektrum enthält keine signifikanten Spektralkomponenten.

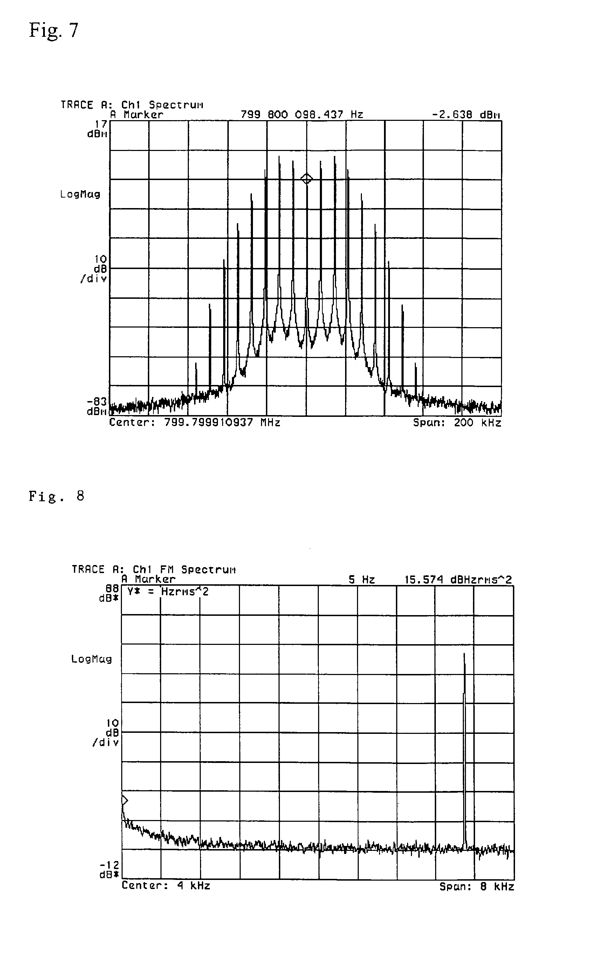

Fig. 7 und 8 veranschaulichen im Vergleich hierzu die Verhältnisse von Sendesignal und demoduliertem Empfangssignal wenn nur das 7 kHz Audio-Signal zur Modulation verwendet wird.

Der Vergleich zeigt, dass für die Übertragung des erfindungsgemäßen Steuersignals in diesem konkreten Anwendungsfall ein zusätzlicher Bandbreitenbedarf von ca. 2 kHz - also ein doppeltes PLL-Frequenzraster - besteht. Ein zusätzlicher Bandbreitenbedarf von 2 kHz ist im Verhältnis zu den üblichen 200 kHz Kanalbandbreiten als geringfügig einzuschätzen.

Durch Einstellung eines anderen Frequenzrasters lässt sich der Frequenzhub und somit der zusätzliche Bandbreitenbedarf verändern bzw. an die Übertragungsanforderungen (Detektionssicherheit, SNR etc.) anpassen. Insbesondere kann durch unsymmetrische Aussteuerung bei gleichem Frequenzraster der zusätzliche Bandbreitenbedarf halbiert werden. Bei unsymmetrischer Aussteuerung und der damit verbundenen Trägermittenfrequenzverschiebung ist auf die Einhaltung der geforderten Frequenztoleranz zu achten.

Der erfindungsgemäße Gedanke beinhaltet auch die Erzeugung des kombinierten Sendesignals auf einer Zwischenfrequenz (ZF) wobei in weiteren Schritten das erzeugte Spektrum erst noch in den tatsächlichen Sendefrequenzbereich verschoben werden muss (z.B. mit Hilfe eines Frequenzmischers).

Der Empfang und die FM-Demodulation des erfindungsgemäßen Sendesignals sowie des Audiosignals unterscheiden sich nicht wesentlich von üblichen Empfängerkonzepten für reine Audio-Übertragung. Zu beachten ist lediglich, dass die für die Signale im Basisband vorgesehenen Koppelkondensatoren so ausgelegt werden, dass die Signalkomponente mit der niedrigsten Frequenz- und speziell die des zu detektierenden Steuersignals - ausreichende Amplitude besitzt.

Nach der FM-Demodulation und ausreichender Signalverstärkung werden das Audiosignal und Zusatzsignal durch Frequenzfilterung voneinander getrennt.

Während das Audiosignal in üblicher Weise weiter verarbeitet werden kann, ist es für eine sichere Erkennung erforderlich das erfindungsgemäße Zusatzsignal z.B. für Steuerungszwecke und / oder Statusanzeigen geeignet aufzubereiten. Hierbei ist insbesondere zu beachten, das Störungen im Übertragungskanal oder kurzfristige Instabilitäten des Sendermodulators zum unbeabsichtigten Empfang sehr niederfrequenter Spektralanteile führen können. Diese niederfrequenten Spektralanteile können auch im Filterdurchlassbereich des Steuerkanals liegen und somit eine zuverlässige Erkennung erschweren. Da davon ausgegangen werden kann, das diese Störungen nur kurzfristig auftreten, wird die Detektionssicherheit erfindungsgemäß durch eine längere Signalbeobachtungszeit verbessert.

In dem Ausführungsbeispiel von Fig. 2 wird für die Detektion des Status- bzw. Steuersignals nach der FM-Demodulation und ausreichender Signalstärkung ein 5 Hz Tiefpassfilter hoher Flankensteilheit gefolgt von einer bistabilen Kippstufe verwendet. Die Kippstufe ist so ausgelegt, das nur zwei stabile Ausgangspegelzustände bestehen - der eine Pegelzustand liegt hierbei unterhalb der digitalen Entscheidungsschwelle für ein LOW-Signal, der andere oberhalb der digitalen Entscheidungsschwelle für ein HIGH-Signal - so dass ein angeschlossener Mikrocontroller an seinem digitalen Eingangsport eine Änderung und speziell die Änderungsfrequenz der HIGH- und die LOW-Signale interpretieren kann. Falls das Sendesignal Spektralkomponenten im Durchlassbereich des Tiefpassfilters aufweist, ändert sich der Zustand am Controller-Eingangspin entsprechend der anliegenden Frequenz. Durch Zählen der registrierten Zustandsänderungen über eine längere Zeit und Vergleich mit den erwarteten Zustandsänderungen des Zusatzsignals im gleichen Zeitraum lässt sich erfindungsgemäß das Zusatzsignal eindeutig erkennen. Der erfinderische Grundgedanke schließt auch andere Detektionslösungen wie z.B. eine analog - digital Wandlung des demodulierten Signals und anschließender digitaler Bearbeitung, mit ein.

Um das demodulierte Audiosignal vom Zusatzsignal zu trennen, ist eine Hochpass- oder Bandpassfilterung ausreichender Flankensteilheit mit einer unteren Grenzfrequenz von z.B. 20 Hz vor der weiteren Audiosignalverarbeitung vorgesehen.

## Patentansprüche

1. Verfahren zum Erzeugen und Detektieren eines Sendesignals für frequenzmodulierende (FM-) Audio-Übertragungssysteme, insbesondere für Audio-Funkübertragungssysteme, das neben einer Audioinformation umfassenden ersten Signalkomponente (Nutzsignal) eine zweite Signalkomponente (Zusatzsignal) umfasst, die Status- und/oder Steuerinformation beinhaltet, **dadurch gekennzeichnet, dass** die zweite Signalkomponente nach FM-Demodulation Hauptspektralkomponenten unterhalb des Audioinformations-Nutzspektrums im Basisband aufweist.

2. Verfahren nach Anspruch 1, **dadurch gekennzeichnet, dass** die Hauptspektralkomponenten der zweiten Signalkomponente nach FM-Demodulation unterhalb 20 Hz liegen.

3. Verfahren nach Anspruch 1 oder 2, **dadurch gekennzeichnet, dass** die Hauptspektralkomponenten der zweiten Signalkomponente nach FM-Demodulation bevorzugt bei etwa 5 Hz liegen.

4. Verfahren nach Anspruch 1, 2 oder 3, **gekennzeichnet durch** Verwendung einer längeren als der normalen empfangsseitigen Signalbeobachtungszeit zugunsten einer verbesserten Detektionssicherheit der FM-demodulierten zweiten Signalkomponente.

5. Verfahren nach einem der Ansprüche 1 bis 4, **dadurch gekennzeichnet, dass** die zweite Signalkomponente permanent übertragen und nur dann ausgesetzt wird, wenn durch diese Signalkomponente eine Funktion beim Empfänger auslöst werden soll, wobei ein das Sendesignal empfangender Empfänger in diesem Fall im Sinne einer negativen Logik auf Signal-Nichterkennung reagiert.

6. Verfahren nach einem der Ansprüche 1 bis 5, **dadurch gekennzeichnet, dass** die zweite Signalkomponente nur dann übertragen wird, wenn eine Funktion beim Empfänger auslöst werden soll, wobei ein das Sendesignal empfangender Empfänger in diesem Fall im Sinne einer positiven Logik auf Signalerkennung reagiert.

7. Verfahren nach Anspruch 5 oder 6, **dadurch gekennzeichnet, dass** bei Reaktion des Empfängers eine Stummschaltung der Audioinformation umfassenden ersten Signalkomponente Audio-Stummschaltung erfolgt.

8. Verfahren nach Anspruch 5 oder 6, **dadurch gekennzeichnet, dass** bei Reaktion des Empfängers eine senderspezifische Statusanzeige erfolgt.

9. Schaltung zur Erzeugung und/oder Detektierung eines durch das Verfahren nach einem der Ansprüche 1 bis 8 erzeugten und detektierten Sendesignals, **gekennzeichnet durch** einen eine Sendefrequenz festlegenden, programmierbaren Phasenregelkreis (PLL), dessen Teiler- bzw. Zählerregister von einem Mikro-Controller periodisch derart umprogrammiert wird, dass der unmodulierte Träger der Sendefrequenz periodisch von seiner Grundfrequenz ausgelenkt wird.

10. Schaltung nach Anspruch 9, **dadurch gekennzeichnet, dass** der Träger von einem spannungsgesteuerten Oszillator (VCO) erzeugt wird, an dessen Ausgang das Sendesignal anliegt.

11. Schaltung nach Anspruch 9 oder 10, **gekennzeichnet durch** ein Schleifenfilter bzw. Loopfilter, welches die Regelspannung für einen VCO erzeugt und den Phasendetektorausgang eines PLL-Synthesizers mit dem Oszillatorfrequenz bestimmenden Eingang eines VCO's verbindet.

12. Schaltung nach Anspruch 11, **dadurch gekennzeichnet, dass** das Schleifenfilter (Loopfilter) für die Erzeugung des Sendesignals nach Anspruch 4 in der Weise optimiert ist das eine FM - Demodulation des Sendesignals nur eine signifikante Spektralkomponente unterhalb des Audionutzspektrums im Basisband aufweist.

13. Schaltung nach Anspruch 9, 10 oder 11, **dadurch gekennzeichnet, dass** der PLL eine einstellbare Ladungspumpe (Charge Pump) zu Festlegung des Phasendetektorausgangsstromes aufiveist.

14. Schaltung nach Anspruch 13, **gekennzeichnet durch** eine Einstellung der Ladungspumpe und damit des Phasendetektorausgangsstroms zugunsten einer verbesserten Detektierbarkeit des FM-demodulierten Sendesignals.

15. Schaltung nach einem der Ansprüche 9 bis 14, **dadurch gekennzeichnet, dass** die Umprogrammierung der Teiler- bzw. Zählerregister so gewählt ist, dass das Sendesignal einer symmetrischen bzw. unsymmetrischen Frequenzauslenkung in Bezug auf die Grundfrequenz bzw. unmodulierte VCO - Frequenz unterliegt, wobei das Zeitintervall zwischen minimaler und maximaler Frequenzauslenkung explizit so gewählt ist, dass nach FM-Demodulation die Hauptspektralkomponenten der zweiten Signalkomponente, die Status- und/oder Steuerinformation umfasst, unterhalb des Audio-Nutzspektrums im Basisband liegen.

16. Schaltung nach einem der Ansprüche 10 bis 15, **dadurch gekennzeichnet, dass** der VCO Teil eines Audio- FM-Modulators mit einem Audio-Eingang ist, um einen Resonanzkreis des VCO durch ein anliegendes Audiosignal so verstimmbar zu machen, dass am Ausgang des VCO ein frequenzmoduliertes Signal anliegt.

17. Schaltung nach einem der Ansprüche 9 bis 16, **dadurch gekennzeichnet, dass** nach empfangsseitiger FM-Demodulation eine Auftrennung des Signalpfads in einen Audiosignalpfad für die erste Signalkomponente und einen Steuer/Statussignalpfad für die zweite Signalkomponente vorgesehen ist.

18. Schaltung nach Anspruch 17, **dadurch gekennzeichnet, dass** im Steuersignalpfad ein Tiefpassfilter bevorzugt hoher Flankensteilheit zur Signalselektion liegt, welches eine Grenzfrequenz unterhalb des Audio-Nutzspektrums aufweist.

19. Schaltung nach Anspruch 18, **dadurch gekennzeichnet, dass** sich an das Tiefpassfilter eine bistabile Kippstufe anschließt, deren Ausgang dazu ausgelegt ist, ausschließlich die logischen Zustände HIGH und LOW anzunehmen, welche von einem Mikro-Controller interpretierbar sind.

20. Schaltung nach Anspruch 19, **dadurch gekennzeichnet, dass** der Mikro-Controller die Änderungsfrequenz der Zustände HIGH und LOW als Kriterium zur Steuer/Statussignalerkennung nutzt.

21. Schaltungsanordnung nach einem der Ansprüche 17 bis 20, **dadurch gekennzeichnet, dass** zur Signalselektion im Audio-Signalpfad ein Hochpassfilter liegt, welches eine Grenzfrequenz oberhalb des Spektrums des Steuer/Statussignals aufweist.
